(19) Europäisches Patentamt
European Patent Office
Office européen des brevets

(11) **EP 4 418 560 A1**

(12) **EUROPEAN PATENT APPLICATION**

(43) Date of publication:
**21.08.2024 Bulletin 2024/34**

(51) International Patent Classification (IPC):
***H04B 7/155*** *(2006.01)*

(21) Application number: **24157913.5**

(22) Date of filing: **15.02.2024**

(52) Cooperative Patent Classification (CPC):
**H04B 7/15535; H04B 7/15507;** H04W 40/22

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.02.2023 JP 2023022784**

(71) Applicant: **TOYOTA JIDOSHA KABUSHIKI
KAISHA**
**Toyota-shi, Aichi-ken, 471-8571 (JP)**

(72) Inventor: **TAKIZAWA, Kenichi**
**Koganei-shi, Tokyo, 184-8795 (JP)**

(74) Representative: **Cabinet Beau de Loménie
158, rue de l'Université
75340 Paris Cedex 07 (FR)**

(54) **COMMUNICATION SYSTEM, COMMUNICATION CONTROL METHOD, AND COMMUNICATION CONTROL APPARATUS**

(57)    A communication system includes a communication control apparatus (1) that performs processing for selecting, from among a plurality of relay stations (3), a relay station to be used for relaying of upward communication from a terminal station (4) to a base station (2). The communication control apparatus selects a relay station (3) to be used for the relaying from remaining relay stations, obtained by removing relay stations for which consideration needs to be given regarding power consumption from one or two or more relay stations that are usable for the relaying, out of the plurality of relay stations.

FIG. 1

EP 4 418 560 A1

**Description**

BACKGROUND

1. Technical Field

The present disclosure relates to a communication system, a communication control method, and a communication control apparatus.

2. Description of the Related Art

In 3GPP (registered trademark), regenerative relaying is one of the relay methods that aim at expanding a cell coverage area (e.g., 3GPP (registered trademark) TS 38.174 V17.0.0(2022-03)) .

Non-regenerative relaying in which demodulation and decoding are not performed in relay stations is one of the low-delay relay techniques (e.g., 3GPP (registered trademark) TS 38.106 V17.0.0(2022-03)).

SUMMARY

The present disclosure aims at providing a communication system, a communication control method, and a communication control apparatus with which power consumption of a relay station that performs non-regenerative relaying can be reduced.

One aspect of the present disclosure is a communication system including a communication control apparatus that performs processing for selecting, from among a plurality of relay stations, a relay station to be used for relaying of upward communication from a terminal station to a base station, wherein the communication control apparatus selects a relay station to be used for the relaying from remaining relay stations, obtained by removing relay stations for which consideration needs to be given regarding power consumption from one or two or more relay stations that are usable for the relaying, out of the plurality of relay stations.

Also, one aspect of the present disclosure is a communication control method for executing a communication control apparatus that performs processing for selecting, from among a plurality of relay stations, a relay station to be used for relaying of upward communication from a terminal station to a base station, the communication control apparatus selecting a relay station to be used for the relaying from remaining relay stations, obtained by removing relay stations for which consideration needs to be given regarding power consumption from one or two or more relay stations that are usable for the relaying, out of the plurality of relay stations.

One aspect of the present disclosure is a communication control apparatus that performs processing for selecting, from among a plurality of relay stations, a relay station to be used for relaying of upward communication from a terminal station to a base station selects a relay station to be used for the relaying from remaining relay stations, obtained by removing relay stations for which consideration needs to be given regarding power consumption from one or two or more relay stations that are usable for the relaying, out of the plurality of relay stations.

The present disclosure may include a base station, a relay station, and a terminal station that constitute the communication system described above, a program, a non-transitory storage medium storing the program, and the like.

According to the present disclosure, power consumption of a relay station that performs non-regenerative relaying can be reduced.

BRIEF DESCRIPTION OF THE DRAWINGS

FIG. 1 is a diagram illustrating a first exemplary configuration of a communication system according to an embodiment;
FIG. 2 is a diagram illustrating a second exemplary configuration of the communication system according to the embodiment;
FIG. 3 is a schematic diagram for describing processing in the communication system;
FIG. 4 is a diagram illustrating an exemplary configuration of a control apparatus;
FIG. 5 is a diagram illustrating an exemplary configuration of a relay station;
FIG. 6 is a diagram illustrating an exemplary configuration of a relay path;
FIG. 7 is a flowchart illustrating exemplary processing in a base station and a relay station;
FIG. 8A and FIG. 8B are flowcharts illustrating an example of processing for selecting a relay station; and
FIG. 9A and FIG. 9B are flowcharts illustrating an example of processing for selecting a relay station.

DESCRIPTION OF THE PREFERRED EMBODIMENTS

Hereinafter, a communication system according to an embodiment will be described based on the drawings. The configuration of the embodiment below is merely an example, and the present discloser is not limited to the configuration of the embodiment. Note that a communication system of 5G (5th Generation Mobile Communication System) is illustrated, but the configurations of a transmitting station, a relay station, and a receiving station according to the present disclosure can be applied to a communication system other than 5G.

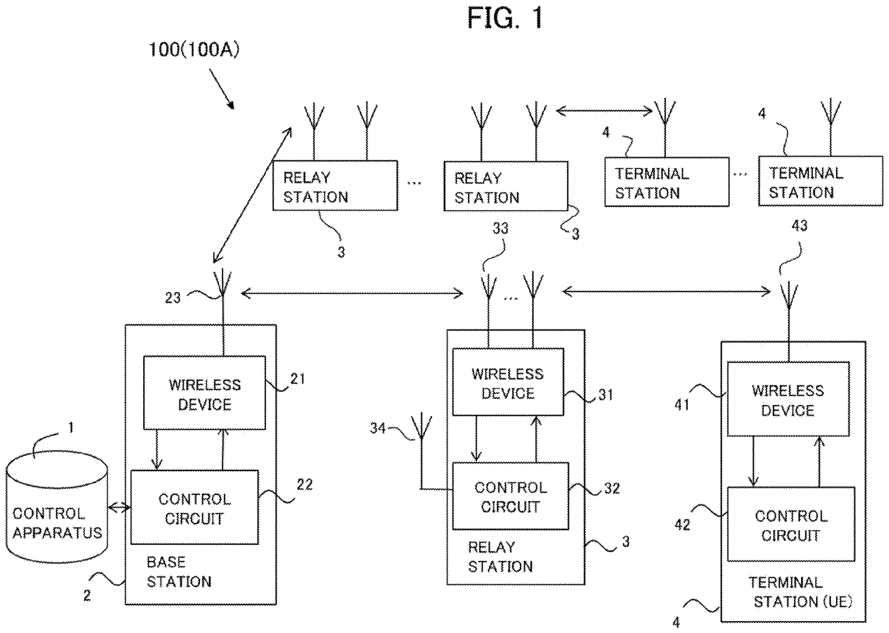

FIG. 1 is a diagram illustrating a first exemplary configuration of the communication system. In FIG. 1, a communication system 100A according to the first exemplary configuration includes a control apparatus 1, a base station 2, a plurality of relay stations 3, and a plurality of terminal stations 4. Two or more of the base stations 2 may also be present, and suitable numbers of two or more can be adopted as the numbers of the relay stations 3 and terminal stations 4.

The control apparatus 1 is an apparatus on a network (e.g., a core network (5GC)) to which the base station 2 is connected. Note that the control apparatus 1 is considered as the core network itself, or a system included in the core network. The core network includes an optical fiber network, for example. The control apparatus 1 controls the base station 2, the relay stations 3, and the terminal stations 4, and provides a communication service to the terminal stations 4.

The base station 2 provides a wireless access network to the terminal stations 4. The area in which wireless communication is possible in the wireless access network is also referred to as a cell. The base station 2 includes one or two or more antennas (one antenna is illustrated in FIG. 1), a wireless device (radio) 21 associated with each antenna, and a control circuit 22. The control circuit 22 includes a processor and a memory, for example. The processor controls, by executing a computer program stored in the memory, communication with the control apparatus 1 (base station 2) and wireless communication with the relay stations 3 and the terminal stations 4.

Each relay station 3 relays wireless communication between the base station 2 and a terminal station 4 in each of an upward direction and a downward direction (performs non-regenerative relaying). The relay station 3 is a small base station, a mobile base station, a vehicle on-board device, or a smartphone, for example. The relay station 3 can be selected as a relay station by the control apparatus 1 from apparatuses that include a configuration that enables non-regenerative relaying. When a connection request from a terminal station 4 occurs, the control apparatus 1 can select one or more relay stations 3 that are located in a range of the cell provided by the base station 2, and transmit an instruction of non-regenerative relaying of wireless communication to each relay station 3. The relay station 3 that has received the instruction operates as a relay station 3 selected by the control apparatus 1.

Each relay station 3 includes one or two or more antennas 33 (a plurality of antennas 33 are illustrated in FIG. 1), wireless devices (radios) 31 associated with the respective antennas 33, and a control circuit (controller) 32, similarly to the base station 2. Note that the relay station 3 may include an antenna 34 that is independent from relay links (antennas 33) in order for the control circuit 32 of the relay station 3 to receive information regarding control.

Each terminal station 4 is a mobile station such as a smartphone, a tablet terminal, a wearable terminal, or an on-board data communication device, for example. Note that there is no limitation to this, and the terminal station 4 may also be a stationary terminal apparatus. For example, the terminal apparatus connects to a wireless access network in a range of the cell provided by the base station 2.

Each terminal station 4 includes one or two or more antennas 43 (one antenna 43 is illustrated in FIG. 1) used for receiving a wireless signal, a wireless device (radio) 41 to be connected to the antenna, and a control circuit 42. For example, a mobile station inside the cell sends a request of connection to the wireless access network to the base station 2, and is connected thereto, and as a result, the mobile station operates as a terminal station 4. A mobile station inside the cell may directly sends a request of connection to the wireless access network to the base station 2. Also, a mobile station inside the cell may send a request of connection to the wireless access network to the base station 2 via an apparatus that operates as a relay station 3 inside the cell. The terminal station 4 can each be said as a station that can communicate with the base station 2 via any of the one or more relay stations 3, or without intervention of the one or more relay stations 3.

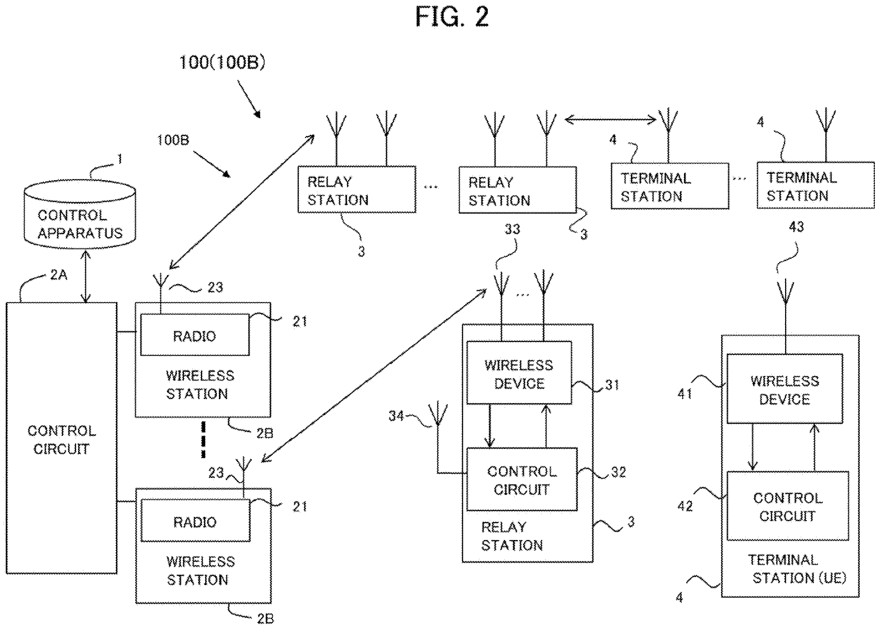

FIG. 2 is a diagram illustrating a second exemplary configuration of the communication system. A communication system 100B according to the second exemplary configuration, as shown in FIG. 2, may also be applied as the communication system. When compared with the communication system 100A in FIG. 1, the communication system 100B differs therefrom in terms of the following point. That is, a base station 2 in the communication system 100B includes a control circuit 2A and one or more wireless stations 2B.

The control circuit 2A corresponds to the control circuit 22 in the communication system 100, and controls operations of the wireless stations 2B. Each wireless station 2B includes a radio 21 associated with an antenna 23. The control circuit 2A and the radio 21 of the wireless station 2B are connected by an optical fiber or a wireless network, for example. The topology of the optical fibers that connect between the control circuit 2A and the wireless stations 2B is not limited to a specific topology. For example, the topology of the optical fibers may be one-to-one connection between nodes, a network that branches in accordance with separation from the control circuit 2A, a star network, a ring network, or the like. Also, when the control circuit 2A and the radios 21B of the wireless stations 2B are connected with a wireless network, the standard and protocol of the wireless network to be adopted is not limited to specific ones.

The control circuit 2A includes a processor and a memory, similarly to the control circuit 22 in FIG. 1. The processor controls, by executing a computer program stored in the memory, communication with the control apparatus 1, and the wireless communication with the relay stations 3 and terminal stations 4. That is, the control circuit 2A controls the wireless communication with the relay stations 3 and terminal stations 4 via the radios 21B of the wireless stations 2B. The configurations of the relay stations 3 and terminal stations 4 are the same as those in the communication system 100A, and the redundant description will be omitted. When no distinction is made between the communication system 100A and the communication system 100B, they are each denoted as a communication system 100.

The communication system 100 is a 5G network, and a following configuration is adopted as a premise. The basic communication unit is a "frame" of 10 milliseconds, and is divided into "sub-frames" of one millisecond length each, for example. The sub-frame is further divided into "slots" of 0.5 milliseconds each, and the slot is divided into 14 "symbols". A cyclic prefix (CP) is inserted between adjacent symbols. For example, a subcarrier of 1 slot=14 symbols$\times$12 (180 kHz) is defined as a resource block (RB), for example. The resource block is a basic unit in communication. In the 5G network, an orthogonal frequency-division multiplexing (OFDM) is applied to the digital modulation system of the baseband signal. The baseband signal of data is carried by the subcarrier which forms a resource block by digital modulation.

The resource blocks to be used by the terminal stations 4 for communication in an uplink and a downlink are assigned to the relay stations 3 and terminal stations 4 by the control apparatus 1 or the control circuit 22 of the base station 2 (control circuit 2A). The resource blocks to be used for non-regenerative relaying are also assigned to the relay stations 3 and terminal stations 4 by the control apparatus 1 or the control circuit 22 of the base station 2 (control circuit 2A).

In the communication system 100, time division multiplex communication is performed, and the same frequency channel is used in the uplink and the downlink. Also, the start timing of each of slots that constitute a wireless frame is synchronized between the base station 2, the relay stations 3, and the terminal stations 4.

In the communication system 100, a block transmission system having a cyclic prefix (CP), such as a CP-OFDM (Cyclic Prefix-Orthogonal Frequency Division Multiplexing), is adopted as the wireless modulation system. In the present embodiment, a case where CP-OFDM is applied will be described, but the block transmission system having a CP may also be other than CP-OFDM. Also, relay stations 3 share resource block information to be used, in the uplink and downlink, by a terminal station 4 to which relaying is performed.

Note that the uplink is a link directed from a terminal station 4 to the base station 2. The downlink is a link directed from the base station 2 to a terminal station 4. A case where non-regenerative relaying is performed in the downlink will be illustrated in the description below. That is, each of the base station 2 and the wireless stations 2B corresponds a "transmitting station", and the terminal stations 4 correspond to "receiving stations". Also, the control apparatus 1, the control circuit 22 of the base station 2, and the control circuit 2A are each an example of an "information processing apparatus" or a "communication control apparatus". Note that the non-regenerative relaying performed by the relay stations 3 in the embodiment may also be applied to the communication in the uplink. In the description below, the communication system 100A will be described as an example of the communication system.

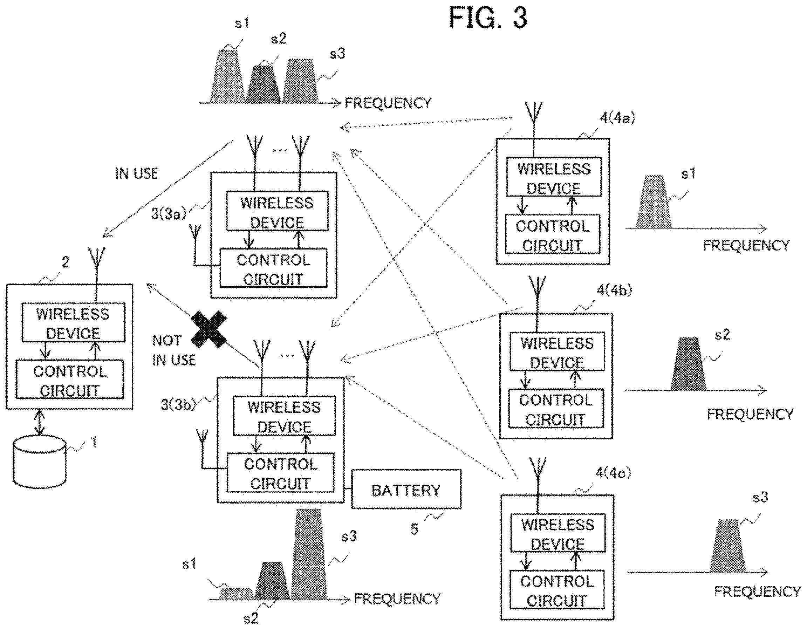

FIG. 3 is a schematic diagram for describing processing in the communication system. In FIG. 3, terminal stations 4a to 4c are present as an example of the plurality of terminal stations 4. Also, relay stations 3a and 3b are present as an example of the plurality of relay stations 3. In the upward communication, the terminal stations 4a to 4c can respectively wirelessly transmit signals s1 to s3 to the uplink using different frequencies such that the signals will not interfere. The relay stations 3a and 3b each receive the signals s1, s2, and s3 from the terminal stations 4a to 4c, and transmits a signal in which the signals s1, s2, and s3 are superimposed to the uplink (toward the base station 2).

Here, the relay station 3a is driven using a commercial power supply, and its operating time is not limited. In contrast, the relay station 3b is driven using a battery 5, and its operating time is limited. If such a relay station 3b continuously performs non-regenerative relaying, the battery 5 is greatly consumed, and a problem is conceivable in that the operating time is shortened. In the present embodiment, the communication system 100 that may resolve such a problem will be described.

In the communication system 100 according to the embodiment, in the selection of a relay station 3, the usage of a relay station 3 for which consideration needs to be given regarding power consumption such as a battery-driven relay station is avoided as far as possible, by making use of a fact that signals from a plurality of terminal stations can be relayed at the same time, which is a feature of the non-regenerative relaying. Also, in the communication system 100, the amplification factor (gain: the ratio between received signal power and transmission signal power) of the relaying signal in the relay stations 3 is reduced as far as possible, and with this, the power consumption is reduced. Accordingly, the coverage of low-delay communication can be expanded by the relay stations that even include the relay station 3b that is battery driven and cannot sufficiently secure the power supply.

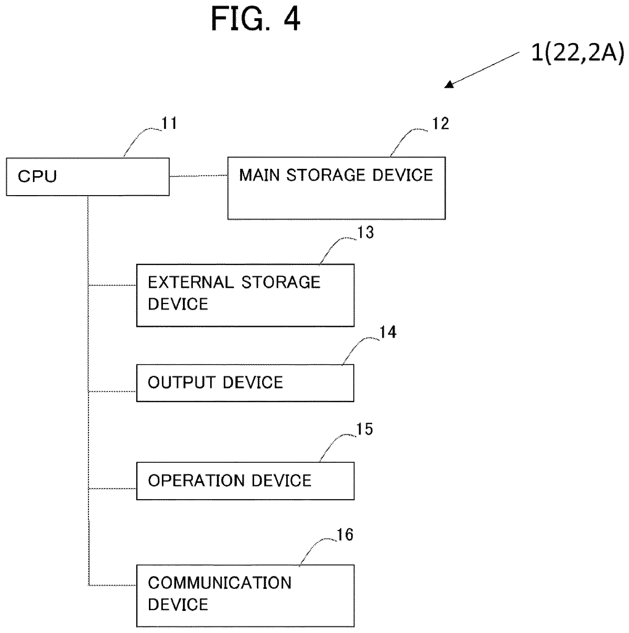

FIG. 4 is a diagram illustrating an exemplary hardware configuration of the control apparatus 1. The control apparatus 1 includes a CPU 11, a main storage device 12, and an external device, and executes communication processing and information processing with a computer program. The CPU 11 is also referred to as a processor. The CPU 11 is not limited to a single processor, and may have a multi-processor configuration. Also, the CPU 11 may include a graphics processing unit (GPU), a digital signal processor (DSP), and the like. Also, the CPU 11 may co-operate with a hardware circuit such as a field programmable gate array (FPGA). An external storage device 13, an output device 14, an operation device 15, and a communication device 16 are illustrated as the external devices.

The CPU 11 executes a computer program that is executably deployed in the main storage device 12, and provides processing of the control apparatus 1. The main storage device 12 stores a computer program to be executed by the CPU 11, data to be processed by the CPU 11, and the like. The main storage device 12 is a dynamic random access memory (DRAM), a static random access memory (SRAM), a read only memory (ROM), and the like. Also, the external storage device 13 is used as a storage area supplementary to the main storage device 12, for example, and stores a computer program to be executed by the CPU 11, data to be processed by the CPU 11, and the like. The external storage device 13 is a hard disk drive, a solid state drive (SSD), or the like. Moreover, a driving device of a removable storage medium may be connected to the control apparatus 1. The removable storage medium may be a Blue-ray disk, a digital versatile disc (DVD), a compact disc (CD), or a flash memory card, for example.

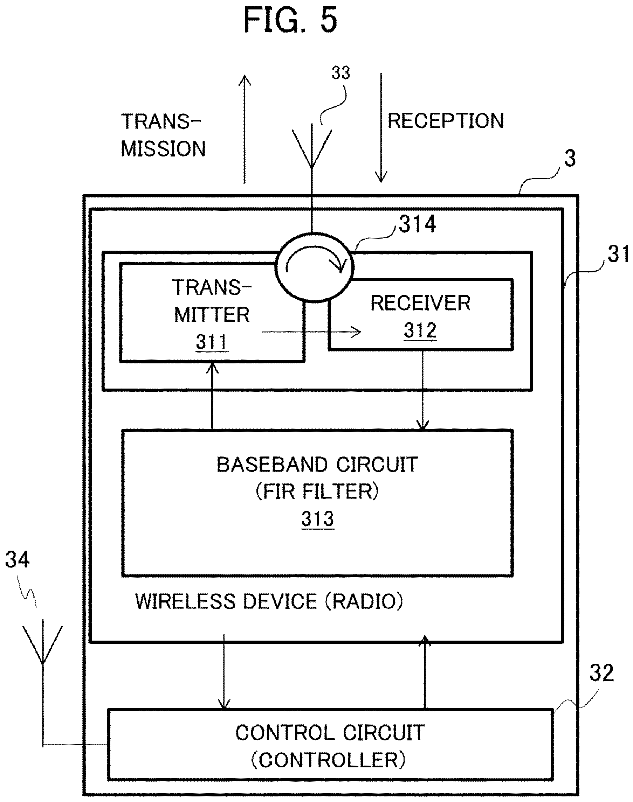

The output device 14 is a display device such as a liquid crystal display or an electroluminescence panel, for example. Note that the output device 14 may include a device that outputs sound, such as a speaker. The operation device 15 is a touch panel in which a touch sensor is overlaid on a display, or the like. The communication device 16 communicates with the base station 2 and an external network such as the Internet via optical fibers, for example. The communication device 16 is a gateway to be connected to the base station 2, and a gateway that communicate with an external network such as the Internet, for example. The communication device 16 may be one device, or a combination of a plurality of devices. Note that the hardware configuration of the control apparatus 1 is not limited to the one shown in FIG. 5.

Also, the control circuit 22 of the base station 2, the control circuit 2A, the control circuits 32 of the relay stations 3, and the control circuits 42 of the terminal stations 4, which are described above, are each configured as a device including the aforementioned CPU 11, main storage device 12, and external storage device 13, and perform predetermined processing by the CPU 11 executing a program.

FIG. 5 is a diagram illustrating an exemplary configuration of the relay station 3. In FIG. 5, the relay station 3 includes the antenna 33, the radio 31 associated with the antenna 33, and the control circuit (controller) 32. A relay station 3 including one antenna 33 is illustrated in FIG. 5, but the relay station 3 may also include two or more antennas. In this case, the radio 31 is provided for each antenna 33.

The radios 31 are configured similarly. That is, each radio 31 includes a transmitter 311, a receiver 312, and a baseband circuit 313. The transmitter 311 and receiver 312 are connected to the antenna 33 via a circulator 314. That is, the transmitter 311, the receiver 312, and the antenna 33 are respectively connected to three ports of the circulator 314. A received signal received by the antenna 33 is input to a first port of the circulator 314, and is transmitted to the receiver 312 from a second port. A transmission signal from the transmitter 311 is input to a third port of the circulator 314, for example, and is transmitted to the antenna 33 from the first port.

Here, the difference in power between the transmission signal and the received signal is about 100 dB, for example. On the other hand, the isolation of the circulator 314 is about 30 dB, and a portion of the transmission signal and the received signal interfere with each other. The interference between a portion of the transmission signal and the received signal in the radio 31 is referred to as a self interference. The self interference can be suppressed by setting predetermined weights to a radio frequency (RF) analog filter in the receiver 312 and an FIR (Finite Impulse Response) filter included in the baseband circuit 313.

The receiver 312 receives a received signal (e.g., a wireless signal from the base station 2 (first wireless signal)) from the antenna 33 via the circulator 314. The receiver 312 includes a quadrature detection circuit and an analog-to-digital (AD) converter. The receiver 312 down-converts the received signal by quadrature detection, and the down-converted signal is further converted to digital data by the AD converter, and with this, a baseband signal is obtained. The receiver 312 inputs the obtained baseband signal to the baseband circuit 313.

The baseband circuit 313 includes the FIR filter. By setting a weight to the FIR filter, the FIR filter operates as a self interference removal circuit that suppresses or removes a transmission signal that gets mixed in with a baseband signal input from the receiver 312 and is in self interference. The output signal from the baseband circuit 313 is input to the transmitter 311, is converted to a wireless signal for a transmission destination, and is emitted from the antenna 33. The transmission destination is the base station 2 in the case of the uplink, and a terminal station 4 in the case of the downlink.

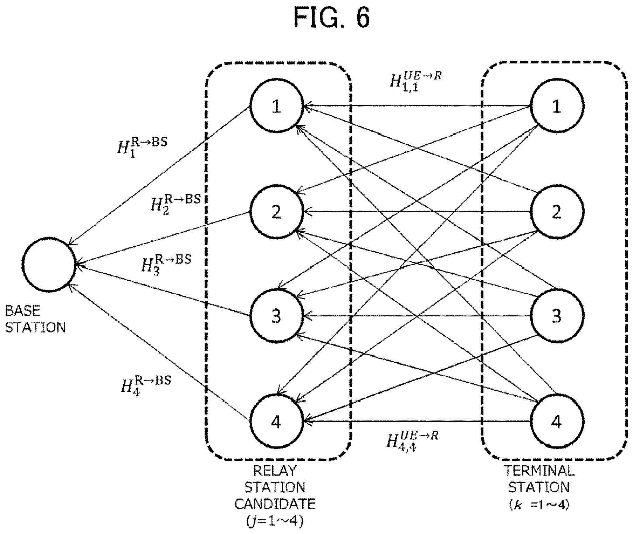

FIG. 6 is a diagram illustrating an exemplary configuration of a relay path in the communication system 100. In FIG. 6, a plurality of terminal stations k (k=1 to 4) are present as the plurality of terminal stations 4. Also, a plurality of relay stations j (j=1 to 4) are present as the candidates of the relay station 3 that relays signals from the plurality of terminal stations k to the base station 2. A number that is one or more can be selected as the number of the terminal stations 4. Also, a number that is two or more can be selected as the number of the candidates of the relay station 3.

The propagation paths (channel matrix) of signals that are transmitted from the terminal stations 4 to the relay stations 3 are represented by H_(j, k)^UE→R. Also, the propagation paths (channel matrix) of signals that are transmitted from the relay stations 3 to the base station 2 are represented by H_(j)^R→BS. The base station 2 (or the control apparatus 1) selects one or two or more relay stations 3 that receive a signal from the terminal station k, from the candidates of the relay station 3. The selection of the relay stations 3 is performed considering the power supplies (battery driven or not) of the relay stations and the like.

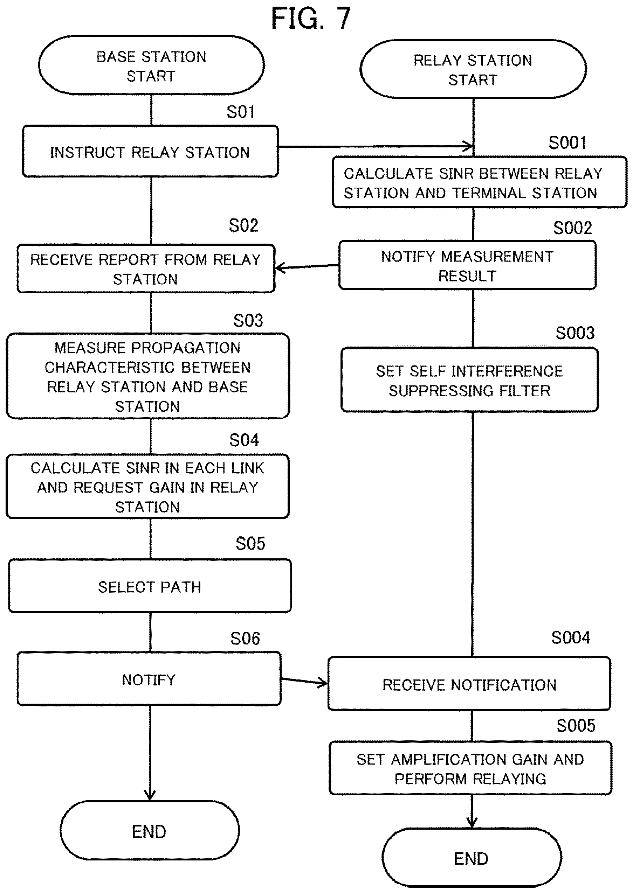

FIG. 7 is a flowchart illustrating exemplary processing in the base station 2 and the relay stations 3 (relay stations j=1 to n (n is a natural number of two or more)). The processing of the base station 2 shown in FIG. 7 may also be performed by the control circuit 2A or the control apparatus 1.

The base station 2 instructs each of the candidate relay stations j to measure the received signal power (step S01). The relay station j that has received the instruction measures received signal power p_(j, k)^RX by receiving a reference signal such as a control channel that the terminal station k transmits to the base station 2, based on the instruction from the base station 2 (step S001). Also, the relay station j acquires remaining self interference power I_(j) and a noise floor Nj of the relay station j. The self interference power and the noise floor may also be acquired in advance.

The relay station j transmits a notification (message) including measurement results (measured values) of the received signal power, self interference power, and noise floor to the base station 2 (step S002). Here, if there is a desire of power consumption reduction (request to consider power consumption) in a case of battery driven or the like, the relay station j can include the desire (request) in the notification. Also, the relay station j may include information indicating the remaining battery amount of the relay station j in addition to the desire (request), or instead of the desire (request).

The relay station j performs setting of a filter (FIR filter) in the self interference suppressing processing using the transmission signal of the notification to the base station 2 (step S003).

The base station 2 receives the notification from the relay station j (step S02). Also, the base station 2 measures the propagation loss L_(j^R→BS) between the base station and the relay station using a reference signal used in the notification from the relay station j (step S03).

The base station 2 calculates a request gain G_(j, k)^R (Formula 2) needed in the relay station j based on a definition (Formula 1) of Γ_(j, k)^R→BS, which is an SINR (Signal-to-Noise Ratio) in the base station, from the measured values notified from the relay station j and the propagation loss between the base station and the relay station. The request gain G_(j, k)^R is calculated using Γ_(k)^REQ, which is a desired SINR defined in the MCS (Modulation and Coding Scheme) used in the communication and a desired margin M (normally, 2 to 4), as shown in Formula 1. Also, the base station 2 calculates Γ_(j, k)^UE→R, which is an SINR between the terminal station and the relay station, using Formula 3.

[Math. 1]

$$\Gamma_{j,k}^{R \to BS} = \frac{G_{j,k}^{R} P_{j,k}^{RX} L_{j}^{R \to BS}}{G_{j,k}^{R}(I_j + N_j)L_{j}^{R \to BS} + N_{BS}} \geq M\Gamma_{k}^{REQ} \quad \cdots \text{(Formula 1)}$$

[Math. 2]

$$G_{j,k}^{R} = \frac{M\Gamma_{k}^{REQ} N_{BS}}{P_{j,k}^{RX} L_{j}^{R \to BS} - M\Gamma_{k}^{REQ}(I_j + N_j)L_{j}^{R \to BS}} \quad \cdots \text{(Formula 2)}$$

[Math. 3]

$$\Gamma_{j,k}^{UE \to R} = \frac{P_{j,k}^{RX}}{I_j + N_j} \geq M\Gamma_{k}^{REQ} \quad \cdots \text{(Formula 3)}$$

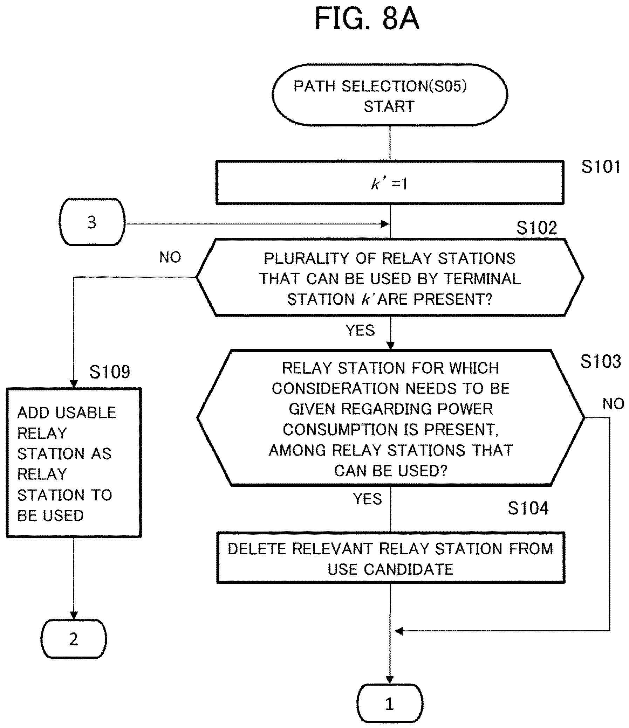

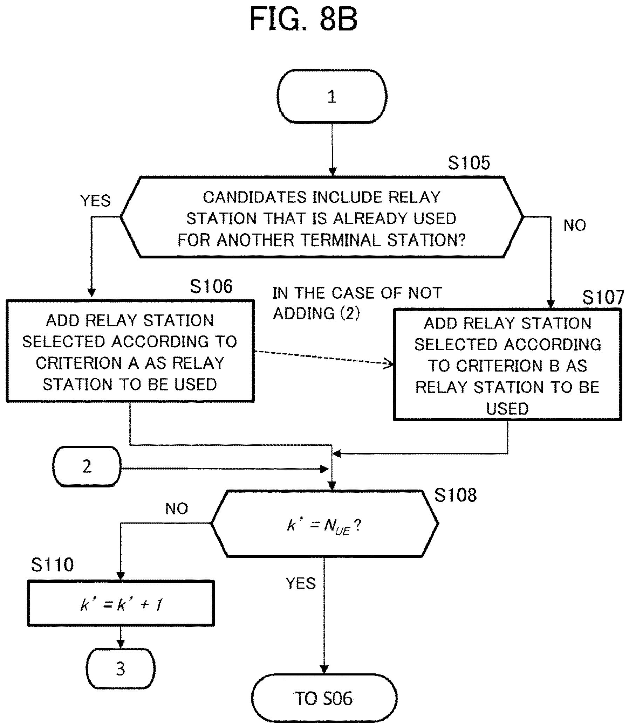

The base station 2 performs selection of the relay station to be used in upward communication (step S05). FIG. 8A and FIG. 8B are flowcharts illustrating an example of processing for selecting a relay station j (first example).

In step S101, the base station 2 sets the value of an index k' to k'=1 (specifies a terminal station k having an index k'=1). The index k' is an index number given to each of the terminal stations k, when the terminal stations k are lined up in a descending order of the desired SINR.

In step S102, the base station 2 determines whether or not a plurality of relay stations that can be used by the terminal station k' are present. If it is determined that a plurality of relay stations are present, the processing is advanced to step S103, and if not, the processing is advanced to step S109. In the present embodiment, the "relay station that can be used" is a relay station j whose SINR=$\Gamma_{(j, k)}^{UE \to R}$ between the terminal station and the relay station is a margin-added desired SINR $=M\Gamma_{(k)}^{REQ}$ or more, and whose request gain $G_{(j, k)}^R$ is a maximum gain that can be applied to the relay station j or less, for example.

In step S103, the base station 2 determines whether or not a relay station j for which consideration needs to be given regarding power consumption is present, among the relay stations that can be used. In step S103, if it is determined that a relay station j for which consideration needs to be given regarding power consumption is present, the processing is advanced to step S104, and if not, the processing is advanced to step S105. The relay stations j for which consideration needs to be given regarding power consumption are following relay stations, for example.

- A relay station j from which the request to consider power consumption is received.
- A relay station j whose remaining battery amount that the base station 2 is notified of is below a threshold value that the base station 2 has.

In step S104, the base station 2 deletes (removes) the relay station j that is determined as a relay station j to which consideration needs to be given from the candidates to be used.

In step S105, the base station 2 determines whether or not the candidates include a relay station j that is already used for another terminal station k. This determination can be performed using information (stored in the main storage device 12 or the external storage device 13) indicating the assignment situation of the terminal stations k to the relay stations j. If it is determined that a relay station j that satisfies the condition (being used for another terminal station k) is present, the processing is advanced to step S106, and if not, the processing is advanced to step S107.

In step S106, the base station 2 adds a relay station j selected according to a criterion A as a relay station to be used. The criterion A is as follows.

(1) If only one relay station j satisfies the condition in step S105, the relay station j is selected.
(2) If a plurality of relay stations j satisfy the condition in step S105, a relay station j whose request gain is larger than $G_{(j, k')}^R$ and closest to the $G_{(j, k')}^R$ is selected. That is, the values of request gain $G_{(j, k)}^R$ (corresponding to second gain) calculated for respective relay stations j that are used for relaying of terminal stations k, where k is not current k', are compared with $G_{(j, k')}^R$ (corresponding to first gain), and a relay station j whose request gain $G_{(j, k)}^R$ is larger than $G_{(j, k')}^R$ and closest to the $G_{(j, k')}^R$ is selected. In other words, a relay station j is selected that is used for relaying of a terminal station k that is not the terminal station k' and whose request gain $G_{(j, k')}^R$ can be secured even if relaying of the terminal station k' is also assigned, and does not unnecessarily increase. By superimposing relaying signals, the number of used relay stations can be reduced, and the power consumption of the relay stations can be saved.

If no relay stations j satisfy the condition of the criterion A (2) in step S106, the following (3) or (4) is executed.
(3) A relay station j to which a gain value closest to $G_{(j, k')}^R$, out of the gain values that have been assigned (set) to relay stations j, is selected, and the request gain of the selected relay station j is updated to $G_{(j, k')}^R$. Here, a configuration may be adopted in which a threshold value $\Delta$ is provided for the difference in gain between the one prior to the update (change) of the request gain and the one thereafter, and if the difference is the threshold value $\Delta$ or less, the update (change) is permitted. A relay station j regarding which the difference exceeds the threshold value $\Delta$ is not selected. This is for suppressing the power consumption of the relay station j. The relay station j that performs relaying for a plurality of terminal stations k can be selected, as described above, using the first gain ($G_{(j, k')}^R$) requested for relaying of the terminal station k' and the gains that have already been assigned to the relay stations j for relaying of the terminal stations k other than the terminal station k'. If there are no selectable relay stations j, the processing is shifted to step S107.
(4) Shifted to a criterion B (step S107).

In step S107, the base station 2 adds the relay station j selected according to the criterion B as the relay station to be used. The criterion B is as follows.

(1) If only one relay station j satisfies the condition in step S105, the relay station j is selected.
(2) If a plurality of relay stations j satisfy the condition in step S105, the following (3) or (4) is executed.
(3) A relay station j whose request gain $G_{(j, k')}^R$ in the relay station is the smallest is selected.
(4) A relay station j whose remaining battery amount for driving is the largest is selected. Note that when a relay station j that is driven by a battery and a relay station j that is driven by a commercial power supply are both present, the relay station j that is driven by a commercial power supply is preferentially selected relative to the relay station j that is driven by a battery.

In step S108, the base station 2 determines whether or not the current k' value has reached N_(UE), which is the number of terminal stations k. If it is determined that the k' value has reached N_(UE), the processing in FIG. 8A and FIG. 8B is ended, and the processing is advanced to step S06 (FIG. 7). In contrast, if it is determined that k' value has not reached N_(UE), the k' value is incremented (step S110), and thereafter the processing is returned to step S102.

If the processing advanced to step S109, the base station 2 adds the usable relay station j as the relay station to be used, and advances the processing to step S108.

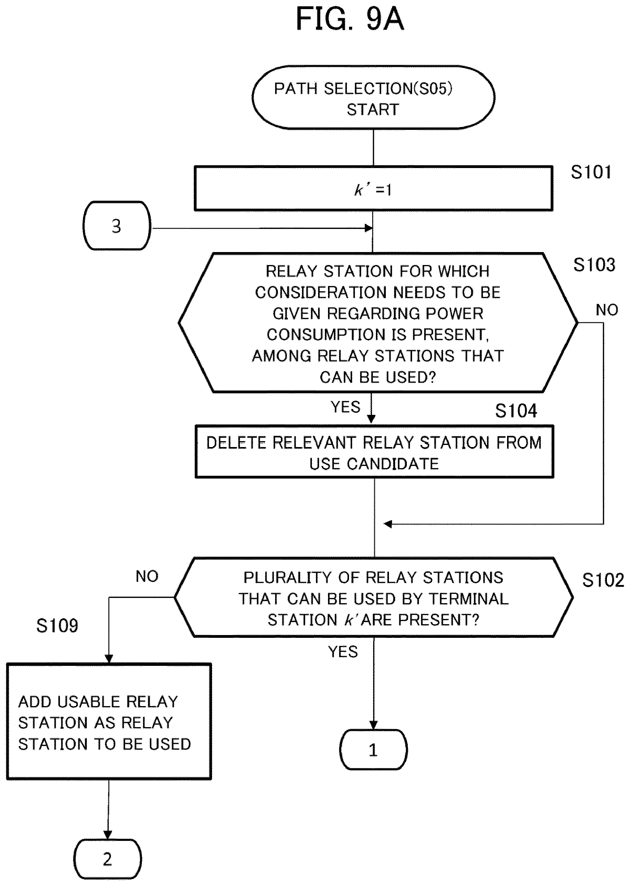

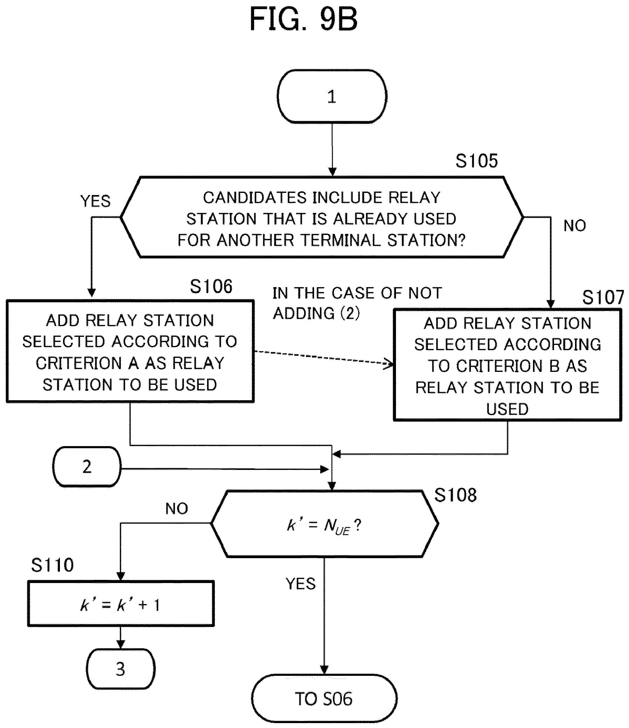

FIG. 9A and FIG. 9B are flowcharts illustrating an example (second example) of processing for selecting a relay station j. The second example shows processing in the case where relay stations to which consideration regarding power consumption needs to be given are removed from the population of the relay station j from the start.

In the second example, processing in steps S103 and S104 is performed subsequently to step S101, and thereafter, processing in step S102 is performed. Except for this point, the processing itself is similar to the first example (Figures 8A and 8B).

In step S06 (FIG. 7), the base station 2 transmits a notification (message) to the relay station j selected in step S05. The notification includes an instruction to perform relaying of an upward signal from a predetermined terminal station k and an amplification gain that is set regarding the relaying.

The relay station j selected by the base station 2 receives the notification from the base station (step S004). The relay station j that has received the notification performs setting of the amplification gain according to the information included in the notification, and performs processing for relaying a signal from the terminal station k that has been instructed in the notification (step S005). When a plurality of terminal stations k are present from which signals are to be relayed, a signal obtained by superimposing the signals from the plurality of terminal station k is relayed.

The communication system according to the embodiment includes the base station 2 (control circuit 22), control apparatus 1, or the control circuit 2A, which is a communication control apparatus that performs processing for selecting a relay station j, from a plurality of relay stations 3 (relay stations j), that is used to relay upward communication from a terminal station 4 (terminal station k) to the base station 2. A relay station for which consideration needs to be given regarding power consumption is removed from one or two or more relay stations that can be used for relaying, out of a plurality of relay stations j. The base station 2 selects a relay station j to be used for relaying from the remaining relay stations j. Accordingly, power consumption of a relay station for which consideration needs to be given regarding power consumption such as a battery-driven relay station can be reduced. That is, power consumption of a relay station j that performs non-regenerative relaying can be reduced.

The base station 2 can extract a relay station j that can be used for relaying based on values (SINR) indicating the quality of communication between the plurality of relay stations j and a terminal station k, and gains $(G\_(j, k')^R)$ requested of the respective relay stations j regarding relaying.

The relay station j for which consideration needs to be given regarding power consumption can include a relay station j that has transmitted a request to consider power consumption to the base station 2, and a relay station j whose remaining amount of battery used for driving the relay station j is below a threshold value.

The base station 2 can select a first relay station, which is a relay station j that is already used for a terminal station k other than the terminal station k', from relay stations j that can be used for relaying, as the relay station to be used for relaying. Accordingly, the number of relay stations that performs relaying can be reduced, and power consumption can be reduced.

The base station 2 can select a first relay station that satisfies the following conditions from a plurality of first relay stations, as the relay station to be used for relaying. Accordingly, while the relay station performs relaying for a plurality of terminals, the power consumption can be suppressed from increasing caused by the unnecessary increase in gain for relaying.

- A second gain $(G\_(j, k)^R)$ that is larger than a first gain $(G\_(j, k')^R)$ requested of each relay station j for relaying of the terminal station k' is requested for relaying of a terminal station k other than the terminal station k'.
- Also, furthermore, a first relay station whose second gain value is closest to the first gain value is selected as the relay station to be used for relaying.

If there are no relay stations for which the second gain that is larger than the first gain is requested, the base station 2 can perform following operations. That is, the base station 2 selects a relay station j whose assigned gain value is closest to the first gain value as the relay station to be used for relaying. Here, the base station 2 changes the gain requested of the selected relay station j to the first gain. Accordingly, the selected relay station can perform relaying with a gain according to the relaying of the terminal station k' and the terminal station k.

When there are no relay stations j that are already used for a terminal station k other than the terminal station k' in one or two or more relay stations that can be used for relaying, the base station 2 can perform following operations. That is, the base station 2 selects a relay station j whose gain $(G\_(j, k)^R)$ requested for relaying is smallest in the one or two or more relay stations as the relay station to be used for relaying. Accordingly, power consumption of relaying can be suppressed.

The base station 2 can transmit an instruction to perform relaying and an instruction to set a gain to be applied when performing relaying to the selected relay station j. Accordingly, the relay station j that has received the instructions can set the gain requested for relaying, and perform relaying at an adequate gain (power consumption).

The embodiment described above is merely an example, and the present disclosure may also be implemented while performing modifications without departing from the gist thereof. Also, the processing and means that are described in the present disclosure can be freely combined and implemented, as long as no technical contradiction arises.

Also, the processing that has been described as being performed by one device may also be executed by a plurality of devices in a shared manner. Alternatively, sets of processing described as being performed by different devices may also be executed by one device. The hardware configuration (server configuration) for realizing the functions in a computer system can be flexibly changed.

The present disclosure can also be realized by supplying a computer program that has implemented the functions described in the embodiment described above to a computer, and at least one processor included in the computer reading out and executing the program. Such a computer program may be provided to the computer using a non-transitory computer-readable storage medium that can be connected to a system bus of the computer, or may also be provided to the computer via a network. The non-transitory computer-readable storage medium includes a disk of any type such as a magnetic disk (such as a floppy (registered trademark) disk or a hard disk drive (HDD)), or an optical disk (such as a CD-ROM, a DVD disk or a Blue-ray disk), or a medium of any type that is suitable for storing an electronic instruction such as a read only memory (ROM), a random access memory (RAM), an EPROM, an EEPROM, a magnetic card, a flash memory, or an optical card, for example.

## Claims

1.  A communication system (100) comprising

    a communication control apparatus (1, 22, 2A) that performs processing for selecting, from among a plurality of relay stations (3), a relay station (3) to be used for relaying of upward communication from a terminal station (4) to a base station (2),
    wherein the communication control apparatus (1, 22, 2A) selects a relay station (3) to be used for the relaying from remaining relay stations (3), obtained by removing relay stations (3) for which consideration needs to be given regarding power consumption from one or two or more relay stations that are usable for the relaying, out of the plurality of relay stations (3).

2.  The communication system according to claim 1, wherein the communication control apparatus (1, 22, 2A) extracts the one or two or more relay stations (3), based on a value indicating communication quality between each of the plurality of relay stations (3) and the terminal station (4) and gains requested of respective relay stations (3) for the relaying.

3.  The communication system according to claim 1 or 2, wherein the relay stations for which consideration needs to be given regarding power consumption include a relay station (3) that has transmitted a request to consider power consumption to the communication control apparatus (1, 22, 2A).

4.  The communication system according to any of claims 1 to 3, wherein the relay stations for which consideration needs to be given regarding power consumption include a relay station (3) of which remaining amount of battery to be used for driving the relay station (3) is below a threshold value.

5.  The communication system according to any of claims 1 to 4, wherein the communication control apparatus (1, 22, 2A) selects a first relay station (3), which is a relay station (3) that has already been used for a terminal station (4) other than the terminal station (4), as a relay station (3) to be used for the relaying, from among the one or two or more relay stations (3).

6.  The communication system according to claim 5, wherein the communication control apparatus (1, 22, 2A) selects, from among a plurality of the first relay stations (3), a first relay station (3), to which a second gain that is larger than a first gain requested of relay stations (3) for relaying of the terminal station (4) has been requested regarding relaying of a terminal station (4) other than the terminal station (4)and the second gain value is closest to the first gain value, as a relay station (3)to be used for the relaying.

7. The communication system according to claim 6, wherein the communication control apparatus (1, 22, 2A) selects, when there are no relay stations to which the second gain larger than the first gain is requested, a relay station (3) of which assigned gain value is closest to the first gain as a relay station (3) to be used for the relaying, and changes the gain requested of the selected relay station (3) to the first gain.

8. The communication system according to any of claims 1 to 7, wherein the communication control apparatus (1, 22, 2A) selects, when there are no relay stations that have already been used for a terminal station (4) other than the terminal station (4) in the one or two or more relay stations (3), a relay station (3) of which requested gain for the relaying is smallest, from among the one or two or more relay stations, as a relay station (3) to be used for the relaying.

9. The communication system according to any of claims 1 to 8, wherein the communication control apparatus (1, 22, 2A) transmits to a selected relay station (3) an instruction of the relaying and an instruction to set a gain to be applied for the relaying.

10. A communication control method for executing
a communication control apparatus (1, 22, 2A) that performs processing for selecting, from among a plurality of relay stations (3) that constitute a communication system (100), a relay station (3) to be used for relaying of upward communication from a terminal station (4) to a base station (2), the communication control apparatus (1, 22, 2A) selecting a relay station (3) to be used for the relaying from remaining relay stations, obtained by removing relay stations for which consideration needs to be given regarding power consumption from relay stations that are usable for the relaying, out of the plurality of relay stations (3).

11. The communication control method according to claim 10, wherein the communication control apparatus (1, 22, 2A) extracts relay stations that are usable for the relaying, based on a value indicating communication quality between each of the plurality of relay stations and the terminal station and gains requested of respective relay stations for the relaying.

12. The communication control method according to claim 10 or 11, wherein the relay stations for which consideration needs to be given regarding power consumption include a relay station that has transmitted a request to consider power consumption to the communication control apparatus (1, 22, 2A).

13. The communication control method according to any of claims 10 to 12, wherein the relay stations for which consideration needs to be given regarding power consumption include a relay station of which remaining amount of battery to be used for driving the relay station is below a threshold value.

14. A communication control apparatus (1, 22, 2A) that performs processing for selecting, from among a plurality of relay stations (3) that constitute a communication system (100), a relay station to be used for relaying of upward communication from a terminal station (4) to a base station (2), and executes
selecting a relay station to be used for the relaying from remaining relay stations, obtained by removing relay stations for which consideration needs to be given regarding power consumption from relay stations that are usable for the relaying, out of the plurality of relay stations.

15. The communication control apparatus (1, 22, 2A) according to claim 14, wherein the communication control apparatus (1, 22, 2A) extracts the one or two or more relay stations, based on a value indicating communication quality between each of the plurality of relay stations and the terminal station and gains requested of respective relay stations for the relaying.

FIG. 1

100(100A)

TERMINAL STATION  4

TERMINAL STATION  4

RELAY STATION  3

RELAY STATION  3

WIRELESS DEVICE  43

41 WIRELESS DEVICE

42 CONTROL CIRCUIT

TERMINAL STATION (UE)  4

31 WIRELESS DEVICE

32 CONTROL CIRCUIT

RELAY STATION  3

33

34

21 WIRELESS DEVICE  23

22 CONTROL CIRCUIT

BASE STATION  2

1 CONTROL APPARATUS

# FIG. 2

100(100B)

100B

CONTROL
APPARATUS — 1

2A

CONTROL
CIRCUIT

RADIO — 21
23

WIRELESS
STATION

2B

RADIO — 21
23

WIRELESS
STATION

2B

RELAY
STATION
3

RELAY
STATION
33
3

WIRELESS
DEVICE — 31

34

CONTROL
CIRCUIT — 32

RELAY
STATION
3

TERMINAL
STATION
4

TERMINAL
STATION
43

WIRELESS
DEVICE
41

CONTROL
CIRCUIT
42

TERMINAL
STATION (UE)
4

EP 4 418 560 A1

FIG. 3

# FIG. 4

1(22,2A)

CPU — 11

MAIN STORAGE DEVICE — 12

EXTERNAL STORAGE DEVICE — 13

OUTPUT DEVICE — 14

OPERATION DEVICE — 15

COMMUNICATION DEVICE — 16

# FIG. 5

TRANS-
MISSION

RECEPTION

33

3

314

31

TRANS-
MITTER
311

RECEIVER
312

BASEBAND CIRCUIT
(FIR FILTER)
313

34

WIRELESS DEVICE (RADIO)

32

CONTROL CIRCUIT
(CONTROLLER)

# FIG. 6

# FIG. 7

BASE STATION START

RELAY STATION START

S01
INSTRUCT RELAY STATION

S001
CALCULATE SINR BETWEEN RELAY STATION AND TERMINAL STATION

S02
RECEIVE REPORT FROM RELAY STATION

S002
NOTIFY MEASUREMENT RESULT

S03
MEASURE PROPAGATION CHARACTERISTIC BETWEEN RELAY STATION AND BASE STATION

S003
SET SELF INTERFERENCE SUPPRESSING FILTER

S04
CALCULATE SINR IN EACH LINK AND REQUEST GAIN IN RELAY STATION

S05
SELECT PATH

S06
NOTIFY

S004
RECEIVE NOTIFICATION

S005
SET AMPLIFICATION GAIN AND PERFORM RELAYING

END

END

# FIG. 8A

PATH SELECTION(S05)
START

$k' = 1$ — S101

3

NO ← PLURALITY OF RELAY STATIONS THAT CAN BE USED BY TERMINAL STATION $k'$ ARE PRESENT? — S102

YES

RELAY STATION FOR WHICH CONSIDERATION NEEDS TO BE GIVEN REGARDING POWER CONSUMPTION IS PRESENT, AMONG RELAY STATIONS THAT CAN BE USED? — S103 → NO

YES

S109

ADD USABLE RELAY STATION AS RELAY STATION TO BE USED

DELETE RELEVANT RELAY STATION FROM USE CANDIDATE — S104

2

1

# FIG. 8B

```
                    ┌─────────┐
                    │    1    │
                    └─────────┘
                         │
                         ▼                              S105
        ┌──────────────────────────────────────────────────┐
  YES   │         CANDIDATES INCLUDE RELAY                  │  NO
 ◄──────┤     STATION THAT IS ALREADY USED                 ├──────►
        │      FOR ANOTHER TERMINAL STATION?               │
        └──────────────────────────────────────────────────┘
```

S106     IN THE CASE OF NOT ADDING (2)     S107

| ADD RELAY STATION SELECTED ACCORDING TO CRITERION A AS RELAY STATION TO BE USED | ADD RELAY STATION SELECTED ACCORDING TO CRITERION B AS RELAY STATION TO BE USED |

```
        ┌─────┐
        │  2  │ ──────────────►
        └─────┘
                        ▼                         S108
         NO    ┌──────────────────────────┐
      ◄────────┤      $k' = N_{UE}$ ?      │
               └──────────────────────────┘
                            │
   S110                     │ YES
   ┌──────────────┐         ▼
   │  $k' = k'+1$ │   ┌──────────┐
   └──────────────┘   │  TO S06  │
        │             └──────────┘
        ▼
   ┌─────┐
   │  3  │
   └─────┘
```

# FIG. 9A

PATH SELECTION(S05)
START

$k' = 1$                                    S101

3

RELAY STATION FOR WHICH
CONSIDERATION NEEDS TO BE
GIVEN REGARDING POWER
CONSUMPTION IS PRESENT,
AMONG RELAY STATIONS THAT
CAN BE USED?                    S103

NO

YES

DELETE RELEVANT RELAY STATION FROM
USE CANDIDATE                  S104

NO

PLURALITY OF RELAY STATIONS
THAT CAN BE USED BY TERMINAL
STATION $k'$ ARE PRESENT?        S102

S109

YES

ADD USABLE RELAY
STATION AS RELAY
STATION TO BE USED

1

2

# FIG. 9B

```
                              ┌─────────┐
                              │    1    │
                              └─────────┘
                                   │
                                   ▼                            S105
          ┌──────────────────────────────────────────────────────┐
   YES    │         CANDIDATES INCLUDE RELAY                      │   NO
 ◄────────│       STATION THAT IS ALREADY USED                   │────────►
          │      FOR ANOTHER TERMINAL STATION?                   │
          └──────────────────────────────────────────────────────┘
    │                                                              │
    │            S106         IN THE CASE OF NOT          S107     │
    ▼                         ADDING (2)                           ▼
┌──────────────────────┐              ┌────────────────────────────┐
│   ADD RELAY STATION  │              │     ADD RELAY STATION       │
│ SELECTED ACCORDING TO│- - - - - - ->│  SELECTED ACCORDING         │
│  CRITERION A AS RELAY│              │   TO CRITERION B AS         │
│  STATION TO BE USED  │              │   RELAY STATION TO BE       │
└──────────────────────┘              │         USED                │
         │                            └────────────────────────────┘
         │          ┌─────────┐                    │
         └─────────►│    2    │──────────►◄─────────┘
                    └─────────┘          │
                                         ▼                S108
            NO        ┌──────────────────────────────┐
        ◄─────────────│         k' = N_UE ?          │
        │             └──────────────────────────────┘
   S110 │                           │
        ▼                           │ YES
 ┌──────────────┐                   ▼
 │  k' = k' + 1 │            ┌──────────────┐
 └──────────────┘            │   TO S06     │
        │                    └──────────────┘
        ▼
  ┌─────────┐
  │    3    │
  └─────────┘
```

$k' = N_{UE}$ ?

$k' = k' + 1$

21

Europäisches
Patentamt

European
Patent Office

Office européen
des brevets

# EUROPEAN SEARCH REPORT

Application Number

EP 24 15 7913

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/183271 A1 (ZHOU YAN [US] ET AL) 23 June 2016 (2016-06-23) * paragraphs [0077] - [0083]; figure 1 * | 1-15 | INV. H04B7/155 |
| X | US 2019/379450 A1 (KAMEI AKIRA [JP] ET AL) 12 December 2019 (2019-12-12) * abstract; claims 10, 12, 20, 22; figure 1 * * paragraphs [0072], [0138], [0142] * | 1-15 | |
| X | US 2008/188177 A1 (TAN POY BOON [SG] ET AL) 7 August 2008 (2008-08-07) * paragraphs [0062], [0066]; claims 1,4, 5, 9; figures 4, 6-7 * | 1-15 | |

TECHNICAL FIELDS
SEARCHED      (IPC)

H04W
H04B
H04L

The present search report has been drawn up for all claims

| Place of search | Date of completion of the search | Examiner |
|---|---|---|
| Munich | 24 June 2024 | Staeger, Rainer |

EPO FORM 1503 03.82 (P04C01)

## ANNEX TO THE EUROPEAN SEARCH REPORT
## ON EUROPEAN PATENT APPLICATION NO.

EP 24 15 7913

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2024

| Patent document cited in search report | | Publication date | Patent family member(s) | | Publication date |
|---|---|---|---|---|---|
| US 2016183271 | A1 | 23-06-2016 | CN | 107113712 A | 29-08-2017 |
| | | | EP | 3235144 A1 | 25-10-2017 |
| | | | JP | 2018506203 A | 01-03-2018 |
| | | | US | 2016183271 A1 | 23-06-2016 |
| | | | WO | 2016099808 A1 | 23-06-2016 |
| US 2019379450 | A1 | 12-12-2019 | JP | 7020691 B2 | 16-02-2022 |
| | | | JP | WO2018142862 A1 | 21-11-2019 |
| | | | US | 2019379450 A1 | 12-12-2019 |
| | | | WO | 2018142862 A1 | 09-08-2018 |
| US 2008188177 | A1 | 07-08-2008 | US | 2008188177 A1 | 07-08-2008 |
| | | | WO | 2006043902 A1 | 27-04-2006 |

EPO FORM P0459

For more details about this annex : see Official Journal of the European Patent Office, No. 12/82